# EUROPÄISCHE PATENTSCHRIFT

(11) **EP 3 874 207 B1**
(45) Veröffentlichungstag und Bekanntmachung des Hinweises auf die Patenterteilung: **28.06.2023**
(21) Anmeldenummer: 19780228.3
(22) Anmeldetag: 30.09.2019
(51) Int. Cl.: F24D 3/00, F24D 19/10, G05D 23/19

(54) **EINSTELLVORRICHTUNG ZUR SELBSTREGULIERENDEN EINSTELLUNG EINES DURCHFLUSSREGELVENTILS UND VERFAHREN ZUR SELBSTREGULIERENDEN EINSTELLUNG**
SELF-CONTROLLED ADJUSTMENT DEVICE FOR A FLOW CONTROL VALVE, AND METHOD FOR SELF-CONTROLLED ADJUSTMENT
DISPOSITIF DE RÉGLAGE PAR RÉGULATION AUTOMATIQUE POUR UNE SOUPAPE DE RÉGULATION DE DÉBIT, ET PROCÉDÉ DE RÉGLAGE PAR RÉGULATION AUTOMATIQUE

(30) Priorität: 02.11.2018 DE 102018127381
(43) Veröffentlichungstag der Anmeldung: 08.09.2021
(73) Patentinhaber: STRAUB KG, 73337 Bad Überkingen (DE)
(72) Erfinder: STRAUB, Thomas, 73337 Bad Überkingen (DE); STRAUB, Philipp, 73337 Bad Überkingen (DE)
(74) Vertreter: Kuhnen & Wacker Patent- und Rechtsanwaltsbüro PartG mbB
(86) Internationale Anmeldenummer: PCT/EP2019/076405
(87) Internationale Veröffentlichungsnummer: WO 2020/088863

(56) Entgegenhaltungen:
- DE-A1- 10 303 827
- DE-A1-102006 061 801
- DE-A1-102009 004 319
- DE-B4-102006 061 801
- US-A1- 2009 314 484

## Beschreibung

Die vorliegende Anmeldung betrifft eine Einstellvorrichtung zur selbstregulierenden Einstellung eines Durchflussregelventils einer Verbraucherschleife mit einem Wärmetauscher in einem Temperierungssystem und ein entsprechendes Verfahren zur selbstregulierenden Einstellung eines Durchflusses in einer Verbraucherschleife mit einem Wärmetauscher in dem Temperierungssystem.

Der Gegenstand dieser Patentanmeldung baut auf dem Gegenstand der DE 10 2017 123 560 A1 derselben Anmelderin auf. Die vorliegende Erfindung basiert auf nicht veröffentlichten, internen Erkenntnissen und Verbesserungen aus einer Produktentwicklung zu der Technik aus der genannten Patentanmeldung der Anmelderin. Teile der vorliegenden Offenbarung, der Zeichnung und nebengeordneter Ansprüche umfassen demzufolge nicht veröffentlichte Teile des älteren Anmeldungsgegenstandes, auf dessen Technik hierin Bezug genommen wird.

Ein technischer Hintergrund der Erfindung liegt in der Anwendung von Heizungs- und Klimatisierungsanlagen für Räume, wie insbesondere Fußbodenheizungen, Flächenheizungen oder Kühldecken, die in einem Gebäude installiert sind, um eine witterungsunabhängige wählbare Raumtemperatur bereitzustellen.

Im Stand der Technik sind aus dem Heizungsbau zahlreiche Anordnungen und Steuerungsverfahren zur komfort- und effizienzorientierten Verteilung und Regelung einer Wärmeenergie durch ein hydraulisches Netz im Gebäude bekannt, wobei ähnliche Installationen in Gebäuden ebenso zur Verteilung und Regelung einer Klimatisierungsenergie bzw. einem Wärmeentzug aus Räumen bekannt sind.

Aus der DE 10 2009 004 319 A1 ist ein Verfahren zur Durchführung eines hydraulischen Abgleichs bekannt, in dem die Rücklauftemperatur an einem Wärmetauscher erfasst wird, und der Volumenstrom durch den Wärmetauscher in Abhängigkeit der Rücklauftemperatur gesteuert wird. In einer Alternative wird eine Temperaturdifferenz zwischen der Vorlauftemperatur und der Rücklauftemperatur ermittelt. Zwischen der ermittelten Temperaturdifferenz und einem Soll-Wert einer konstanten Temperaturdifferenz wird eine Regeldifferenz gebildet. Der Volumenstrom durch den Wärmetauscher wird anhand dieser Regeldifferenz gesteuert, um die Rücklauftemperatur an den Soll-Wert der konstanten Temperaturdifferenz anzunähern.

Ferner wird in der DE 10 2009 004 319 A1 ein Verfahren zum Betreiben einer Heizungs- oder Kühlanlage vorgeschlagen, bei dem die Temperaturdifferenz zwischen Vorlauf und Rücklauf bzw. nur die Rücklauftemperatur geregelt wird, so dass ein temperaturbasierter hydraulischer Abgleich jedes Wärmetauschers eines Heizungs- oder Kühlsystems erfolgt und dieser Abgleich bei Änderungen des Betriebszustandes stets neu eingestellt und optimiert wird.

Die US 2009/314484 A1 offenbart einen eigenständigen Durchflussregler zum Steuern des Durchflusses von Kühl- oder Heizfluid durch einen Wärmetaucher durch Bereitstellen eines Steuersignals an einen Durchflussventilaktuator, um ansprechend darauf ein Durchflussventil zu öffnen oder zu schließen. Ein erster Temperatursensor misst eine Eintrittstemperatur des in den Wärmetauscher einströmenden Kühl- oder Heizfluids und ein zweiter Temperatursensor misst eine Austrittstemperatur des aus dem Wärmetauscher ausströmenden Kühl- oder Heizfluids. Eine Steuereinheit spricht auf eine Temperaturdifferenz zwischen der Eintrittstemperatur und der Austrittstemperatur an, um das Steuersignal so einzustellen, dass die Temperaturdifferenz im Wesentlichen konstant gehalten wird.

In der DE 10 2006 061 801 A1 regelt ein Temperierregelsystem die Innentemperatur mindestens eines Gebäuderaumes. Hierzu werden zunächst die Ist-Innentemperatur und die Ist-Luftfeuchte des Raums erfasst. Aus diesen Werten wird in einem Regelmodul eine Minimaltemperatur berechnet, die von Temperierrohrleitungen des Temperierregelsystems benachbarten Raumabschnitten nicht unterschritten werden soll. Eine Soll-Vorlauftemperatur wird anhand der berechneten Vorlaufminimaltemperatur für die Rohrleitungen vorgegeben. Eine Mischeinrichtung wird zur Regelung der Vorlauftemperatur angesteuert. Dosierventile werden derart angesteuert, dass die Ist-Raumtemperatur einer vorgegebenen Soll-Raumtemperatur entspricht. Bei Unterschreiten einer vorgegebenen Eingriffstemperatur, die oberhalb einer Flächenminimaltemperatur liegt, durch eine gemessene Ist-Grenztemperatur eines im Betrieb des Temperierregelsystems extrem temperierten Grenztemperaturraumabschnitts wird die Temperierung dieses Raumabschnitts derart beeinflusst, dass dieser Raumabschnitt die Flächenminimaltemperatur nicht unterschreitet. Dieses Betriebsverfahren des Temperierregelsystems im Kühlbetrieb ist entsprechend auch für den Heizbetrieb ausgelegt.

Die DE 103 03 827 A1 offenbart eine Kühldeckenanordnung mit mindestens einem Wärmetauscher, einem Ventil, das den Durchfluss eines Wärmeträgermediums durch den Wärmetauscher steuert und eine mechanische Regeleinrichtung aufweist, und einer Überwachungseinrichtung. Man möchte eine Kondensatbildung an der Kühldecke auf einfache Weise vermeiden. Hierzu weist die Überwachungseinrichtung einen Verstellantrieb auf, der die Regeleinrichtung mechanisch in einen Zustand verstellt, in dem das Ventil geschlossen ist.

Die zuvor genannte, zum Einreichungstag noch nicht offengelegte Patentanmeldung DE 10 2017 123 560.4 beschreibt eine Einstellvorrichtung und ein Verfahren zur selbstregulierenden Einstellung eines Durchflusses in Verbraucherschleifen mit einem Wärmetauscher, die auf einer Berechnung einer anwendungsoptimierten Spreizung zwischen der Vorlauftemperatur und Rücklauftemperatur, also einer variablen Temperaturdifferenz in jeder Verbraucherschleife basieren. Die Einstellvorrichtung bildet dabei die maßgebliche Komponente eines Temperierungssystems, in dem das dementsprechende Verfahren umgesetzt wird, und das ein zugeordnetes Raumthermostat aufweist. Die Berechnung einer variablen Spreizung der Temperaturdifferenz dient dazu, in einer individuellen Installationsumgebung des Wärmetauschers einen optimalen Betriebspunkt selbstständig anzupassen. Der Einbezug der resultierenden Heizdauer gleicht Begebenheiten des Gebäudes, wie z.B. Stockwerk, Kellerlage oder Außenwandverhältnis sowie Begebenheiten der Installation aus, und ermöglicht es, eine schnellere Raumtemperierung innerhalb eines effizienten Bereichs selbstständig zu optimieren. Eine Mehrzahl entsprechender Einstellvorrichtung führt ohne Erfordernis einer zentralen Steuerungseinheit eine bedarfsgerechte Verteilung der Teilströme in den Verbraucherschleifen aus.

Ausgehend von dem Stand der Technik und dem nicht veröffentlichten Anmeldungsgegenstand, ist es eine Aufgabe der vorliegenden Erfindung, eine verbesserte Einstellvorrichtung und ein verbessertes Verfahren für eine Verbraucherschleife mit Wärmetauscher in einem Temperierungssystem zu schaffen, die eine weitere Anwendungsoptimierung des Temperierungssystems ermöglicht. Eine Anwendungsoptimierung kann Verbesserungen bzgl. der energetischen Effizienz, einer möglichen Beeinträchtigung oder Gefährdung der Instandhaltung eines Gebäudes oder der Lebensdauer von Ventilen verschaffen, wie nachstehend erläutert wird.

Diese Aufgabe wird durch das kennzeichnende Merkmal einer Einstellvorrichtung nach Anspruch 1 und durch das kennzeichnende Merkmal eines Verfahrens nach Anspruch 13 gelöst.

Die Einstellvorrichtung zur selbstregulierenden Einstellung eines Durchflussregelventils zeichnet sich insbesondere dadurch aus, dass die Einstellvorrichtung erfindungsgemäß dazu eingerichtet ist, das Durchflussregelventil auf einen kleineren vorbestimmten Durchflussquerschnitt als denjenigen Durchflussquerschnitt, der basierend auf der Regeldifferenz eingestellt wird, zu drosseln, wenn die erfasste eingangsseitige Vorlauftemperatur innerhalb eines vorbestimmten Wertebereichs liegt.

Das entsprechende erfindungsgemäße Verfahren zur selbstregulierenden Einstellung eines Durchflusses zeichnet sich insbesondere aus durch einen Schritt eines Drosselns auf einen kleineren vorbestimmten Durchflussquerschnitt als denjenigen Durchflussquerschnitt, der basierend auf der Regeldifferenz eingestellt wird, wenn die erfasste eingangsseitige Vorlauftemperatur innerhalb eines vorbestimmten Wertebereichs liegt.

In ihrer allgemeinsten Form sieht die vorliegende Erfindung somit erstmals vor, einen auf Berechnungen basierenden Regelungsbetrieb eines Volumenstroms in einem Wärmetauscher an einem ungünstigen Betriebspunkt oder einem bedenklichen Betriebsbereich auszusetzen und durch eine vorbestimmte Drosselung bzw. Notdrosselung zu übersteuern.

Hierzu liegt der Erfindung die Erkenntnis zugrunde, dass sich aus einer Vielzahl von Parametern, die in einer Regelung eines Temperierungssystems erfasst oder berechnet werden, die Vorlauftemperatur in der Verbraucherschleife des betreffenden Wärmetauschers dazu eignet, ineffiziente Betriebszustände zu identifizieren, in denen eine Abweichung von der vorgesehenen Regelung in Form einer Drosselung eine Anwendungsoptimierung darstellt. Ferner wurde festgestellt, dass gefährdende Betriebszustände für eine Installationsumgebung des Wärmetauschers auftreten können, und sich diese -in umgekehrter Weise- darauf zurückführen lassen, dass von eben dieser Vorlauftemperatur bestimmte Grenzbereiche vorgelegen haben. Die später erläuterten gefährdenden Betriebszustände können ebenfalls durch eine Abweichung von der vorgesehenen Regelung in Form einer Drosselung vermieden werden, wodurch weitere Anwendungsoptimierungen darstellbar sind.

Als Schlussfolgerung eignen sich Definitionen von Wertebereichen der Vorlauftemperatur dazu, ineffiziente oder gefährdende Betriebszustände zu charakterisieren, wonach die definierten Wertebereiche herangezogen werden, um eine Regelung durch Einleitung einer Drosselung zu übersteuern.

Vorteilhafte Weiterbildungen der vorliegenden Erfindung sind Gegenstand der abhängigen Ansprüche.

Gemäß einem Aspekt der Erfindung können vorbestimmten Wertebereichen konstante Drosselungen des Durchflussquerschnitts zugeordnet sein. Durch die Definition mehrerer Wertebereiche können in identischer Vorgehensweise bzw. steuerungstechnischer Umsetzung mehrere Anwendungsoptimierungen realisiert werden. Durch eine konstante Einstellung oder Schließung des Durchflussquerschnitts während der Drosselung kann ein weiterer Regelungsaufwand entfallen obwohl eine Verbesserung der Energieeffizienz oder eine Vermeidung einer Gefährdung in der Installationsumgebung realisiert wird.

Gemäß einem Aspekt der Erfindung kann ein mittlerer geschlossener Wertebereich der eingangsseitigen Vorlauftemperatur vorbestimmt sein, der eine behagliche Raumtemperatur abdeckt. Der mittlere Wertebereich weist beispielsweise einen Mittelwert zwischen 20°C und 24°C und eine Spanne von ±1K oder vorzugsweise ±2K um den Mittelwert auf. Ein derartiger mittlerer Wertebereich der Vorlauftemperatur kann beispielsweise bei einem zeitweise einsetzenden und aussetzenden Betrieb einer Wärmequelle auftreten. Ferner kann der mittlere Wertebereich bei einem Übergang des Temperierungssystems von einem Heizbetrieb in einen optionalen Kühlbetrieb auftreten. In diesem Fall findet ein Wechsel der Temperierungsquelle statt, sodass beispielsweise ein Kreislauf mit denselben Wärmetauschern wie im Heizbetrieb nicht mehr zu einer Wärmequelle, sondern zu einer Kältequelle geleitet wird.

In dem mittleren Wertebereich liegt die eingangsseitige Vorlauftemperatur eines flüssigen Wärmeträgers, entweder als Heizungswasser zum Beheizen oder als Kühlwasser zum Kühlen, derart nahe an einer üblicherweise gewünschten Raumtemperatur, dass anzunehmen ist, dass zwischen der tatsächlichen Raumtemperatur und dem flüssigen Wärmeträger keine geeignete Temperaturdifferenz für einen effektiven Wärmeübergang vorliegt. Demzufolge steht der Energieaufwand zur Umwälzung des Wärmeträgers in einem ineffizienten Verhältnis zur Temperierungsleistung, wodurch eine Drosselung gegenüber einer regulären Einstellung energetisch sinnvoll ist.

Gemäß einem Aspekt der Erfindung kann ein oberer offener Wertebereich der eingangsseitigen Vorlauftemperatur vorbestimmt sein, dessen unterer Grenzwert eine Schädigung von Baumaterialien ausschließt. Der untere Grenzwert liegt beispielsweise zwischen 55°C und 60°C. Insbesondere bei Fußbodenheizungen, die eine Installation einer Leitungsstrecke am Boden als Wärmetauscher umfassen, kann es bei gehobenen Temperaturen zu Spannungen durch Wärmeausdehnungen unterschiedlicher Materialien in der Installationsumgebung kommen. Beispielsweise können Risse in einem Estrich oder in einer Anordnung von Bodenkacheln entstehen. Durch eine Drosselung des Volumenstroms eines Wärmeträgers, dessen Vorlauftemperatur in einem materialspezifisch kritischen oberen Wertebereich liegt, wird der Wärmeeintrag in die Installationsumgebung im Vergleich zu einer regulären Einstellung des Durchflusses effektiv begrenzt oder gestoppt. Dadurch wird zu einer Vermeidung von Gebäudeschäden, wie Rissbildungen im Bereich des Bodens beigetragen. Unabhängig davon können andere Typen von Wärmetauschern innerhalb des Temperierungssystems zeitgleich ungedrosselt durchflossen werden.

Gemäß einem Aspekt der Erfindung kann ein unterer offener Wertebereich der eingangsseitigen Vorlauftemperatur vorbestimmt sein, dessen oberer Grenzwert einen Taubildungspunkt einschließt. Der obere Grenzwert liegt beispielsweise zwischen 15°C und 17°C. Je nach Bedingungen eines Raumklimas, insbesondere Luftfeuchtigkeit und Luftströmung, kann ab einer Temperatur von etwa 16°C und darunter an Oberflächen eine Kondensation der Luftfeuchtigkeit auftreten. Eine Ansammlung des Kondensats oder ein Herabtropfen an Oberflächen des Wärmetauschers kann wiederum zu Wasserschäden an einem Mauerwerk, einem Parkett oder dergleichen führen. Insbesondere in einem Fall, bei dem die Installation einer Fußbodenheizung in einem Kühlbetrieb genutzt wird, kann es zu Rutschgefahr und Wasserschäden durch Feuchtigkeitsbildung auf dem Bodenbelag kommen. Durch eine Drosselung des Volumenstroms eines Wärmeträgers, dessen Vorlauftemperatur in einem kritischen unteren Wertebereich liegt, wird eine Kondensation von Luftfeuchtigkeit an Oberflächen eines Wärmetauschers im Vergleich zu einer regulären Einstellung des Durchflusses effektiv begrenzt oder gestoppt. Dadurch wird zu einer Vermeidung von einer Rutschgefahr oder Wasserschäden beigetragen.

Gemäß einem Aspekt der Erfindung kann dem mittleren Wertebereich eine konstante Drosselung zugeordnet sein, die einen Durchflussquerschnitt von 10% bis 20%, vorzugsweise 15% eines vollständig geöffneten Durchflussquerschnitts beträgt. Eine konstante Einstellung des Durchflussquerschnitts auf diesen Wert stellt einen ermittelten universellen Kompromiss zwischen einer Energieeffizienz der Umwälzung des Wärmeträgers und einer Heizleistung oder Kühlleistung dar.

Gemäß einem Aspekt der Erfindung kann dem oberen Wertebereich eine konstante Drosselung zugeordnet sein, die einer vollständigen Schließung des Durchflussquerschnitts entspricht. In diesem Fall können Gebäudeschäden, wie Rissbildungen im Bereich des Bodens durch zu hohe Vorlauftemperaturen sicher ausgeschlossen werden.

Gemäß einem Aspekt der Erfindung kann dem unteren Wertebereich eine konstante Drosselung zugeordnet sein, die einer vollständigen Schließung des Durchflussquerschnitts entspricht. In diesem Fall können eine Rutschgefahr oder Wasserschäden an einem Parkett oder dergleichen durch zu niedrige Vorlauftemperaturen sicher ausgeschlossen werden.

Gemäß einem Aspekt der Erfindung kann das Einstellen oder Drosseln des Durchflussquerschnitts in der Verbraucherschleife periodisch erfolgen. Dementsprechend kann ein permanenter Überwachungs- und Regelungsaufwand an dem Temperierungssystem reduziert werden.

Gemäß einem Aspekt der Erfindung kann eine Zeitdauer zwischen dem periodischen Einstellen oder Drosseln des Durchflussquerschnitts zwischen 5 min. und 15 min., vorzugsweise 10 min. betragen, wenn die eingangsseitige Vorlauftemperatur außerhalb eines vorbestimmten Wertebereichs liegt. Aufgrund einer charakteristischen Reaktionsträgheit des Temperierungssystems und der Installationsumgebung stellt diese ermittelte Zeitdauer einen ermittelten Kompromiss zwischen einer geringen Beeinträchtigung der Funktionalität und einer erheblichen Reduzierung der Stellbewegungen, d.h. eines entsprechenden Verschleißes der Einstellvorrichtung und des Durchflussregelventils dar.

Gemäß einem Aspekt der Erfindung kann eine Zeitdauer zwischen dem periodischen Einstellen oder Drosseln des Durchflussquerschnitts zwischen 10 min. und 20 min., vorzugsweise 15 min. betragen, wenn die eingangsseitige Vorlauftemperatur innerhalb eines vorbestimmten Wertebereichs liegt. Da die vorbestimmten Wertebereiche in einem ordnungsgemäß eingestellten Temperierungssystem eine Ausnahme gegenüber den häufiger auftretenden, übrigen Wertebereichen der Vorlauftemperatur darstellen, kann zur Überprüfung einer Beibehaltung der Drosselung eine größere Zeitspanne verwendet werden als in einem regulären Betrieb. Dadurch wird zu einer weiteren Reduzierung der Stellbewegungen und eines entsprechenden Verschleißes der Einstellvorrichtung und des Durchflussregelventils beigetragen.

Die Erfindung sowie eine geeignete Technik zur Umsetzung der Erfindung werden anhand der Figurenbeschreibung mit Bezug auf die begleitende Zeichnung besser verständlich, wobei dieselben Bezugszeichen für dieselben Gegenstände Verwendung finden, in denen:
- Fig. 1: ein Diagramm zeigt, in dem qualitativ eingeteilte Wertebereiche (Wu, W_{M}, Wo) für die erfindungsgemäße Drosselung sowie eine variable Temperaturspreizung außerhalb der Wertebereiche an den Achsen aufgetragen sind;
- Fig. 2: ein Diagramm zeigt, in dem beispielgebende Vorlauftemperaturen (abgekürzt T_{VL}) für die Wertebereiche der erfindungsgemäßen Drosselung und beispielgebende Werte der variablen Temperaturspreizung an den Achsen aufgetragen sind;
- Fig. 3: eine Querschnittsansicht durch eine Einstellvorrichtung zeigt;
- Fig. 4: eine Darstellung eines Temperierungssystems mit Einstellvorrichtungen in einer Verteilervorrichtung, Thermostaten und weiteren Systemkomponenten zeigt;
- Fig. 5: ein Blockschaltbild, das die Systemkomponenten zur Selbstregulierung darstellt.

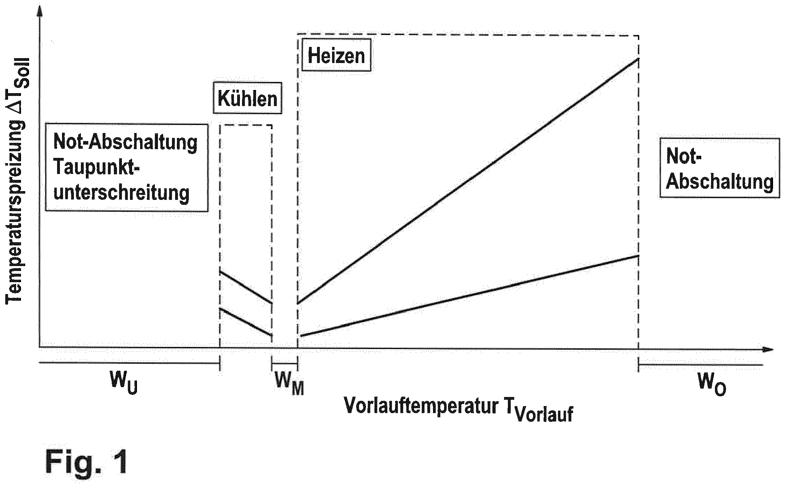

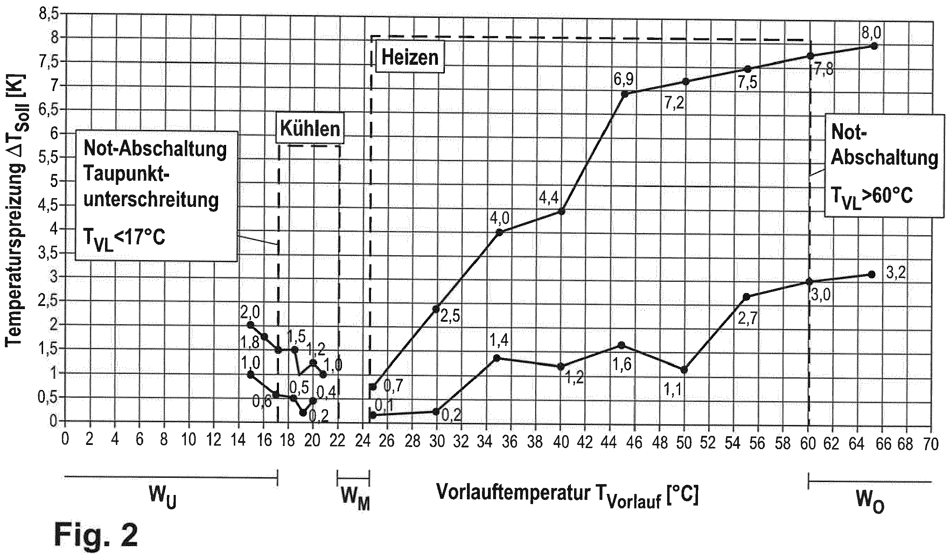

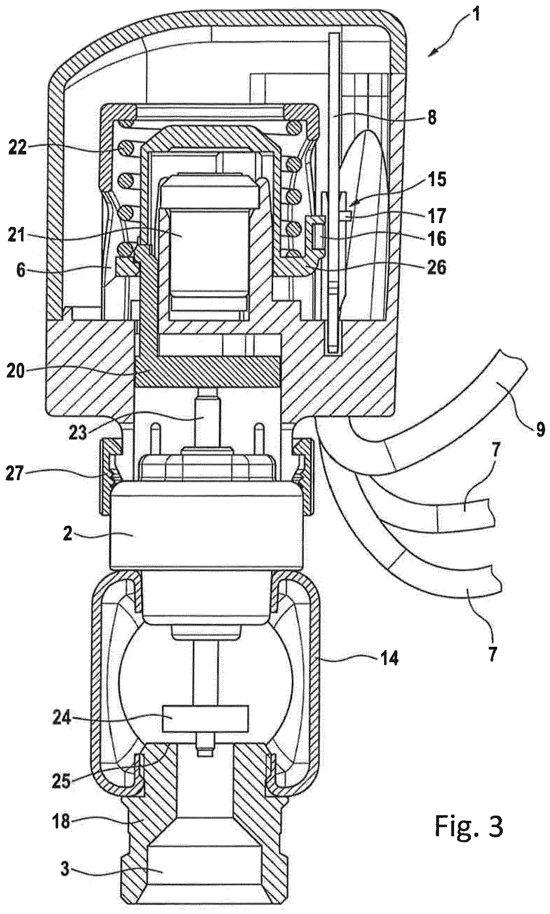

Nachstehend wird eine beispielhafte Ausführungsform der erfindungsgemäßen Drosselung des Durchflussquerschnitts mit Bezug auf die Figuren 1 und 2 beschrieben, die an einer Einstellvorrichtung 1 in einem Temperierungssystem 10, die in den Figuren 3 bis 5 dargestellt sind, realisiert wird.

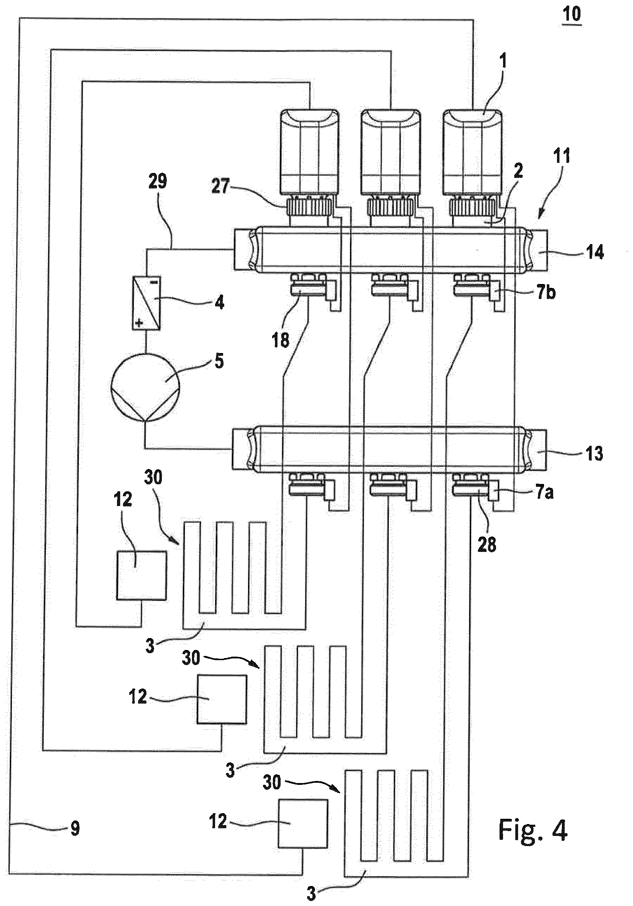

Fig. 1 zeigt ein Diagramm, in dem an einer waagerechten Achse eine Vorlauftemperatur T_{Vorlauf} einer in Fig. 4 dargestellten Verbraucherschleife 3 in drei qualitativ unterschiedliche vorbestimmte Wertebereiche (W_{U}, W_{M}, W_{O}) und in zwei dazwischen liegende Wertebereiche eines Heizbetriebs und eines Kühlbetriebs unterteilt ist. Eine Regelung bestimmt für den Heizbetrieb und den Kühlbetrieb eine variable Temperaturspreizung ΔT_{Soll} zwischen der eingangsseitigen Vorlauftemperatur T_{Vorlauf} und der ausgangsseitigen Rücklauftemperatur T_{Rücklauf}. Die variabel bestimmte Temperaturspreizung ΔT_{Soll} liegt in einem qualitativen Wertebereich, der anhand zwei Kennlinien zur Darstellung einer Obergrenze und einer Untergrenze derselben zu der vertikalen Achse aufgetragen ist.

Fig. 2 zeigt ein dementsprechendes Diagramm, in dem beispielgebende Werte für die eingangsseitige Vorlauftemperatur T_{Vorlauf} in Grad Celsius sowie beispielgebende Werte für die Obergrenze und Untergrenze der variablen Temperaturspreizung ΔT_{Soll} in Kelvin an den Achsen aufgetragen sind.

Der flüssige Wärmeträger des in Fig. 4 dargestellten Temperierungssystems 10 durchfließt eine Wärmequelle oder eine Kältequelle und wird anschließend in eine von parallel geschalteten Verbraucherschleifen 3 mit Wärmetauschern 30 geleitet. Der jeweilige Volumenstrom in jeder Verbraucherschleife 3 wird durch ein Durchflussregelventil 2 begrenzt. Das Durchflussregelventil 2 in jeder Verbraucherschleifen 3 wird jeweils durch eine Einstellvorrichtung 1 geregelt und eingestellt, die eine Vorlauftemperatur T_{Vorlauf} am Eingang und eine Rücklauftemperatur T_{Rücklauf} am Ausgang der Verbraucherschleife 3 erfasst. Das Diagramm bezieht sich auf eine Regelung und eine konstante Drosselung der Einstellung des Durchflussquerschnitts in einer Verbraucherschleife 3 mit vorzugsweise einem, oder aber mehreren Wärmetauschern 30, in Abhängigkeit der Vorlauftemperatur T_{Vorlauf}.

Wenn die Vorlauftemperatur T_{Vorlauf} kleiner als 17°C ist, liegt sie in einem vorbestimmten unteren Wertebereich Wu kritischer Temperaturen. Sobald die Einstellvorrichtung 1 in einem Regelungsbetrieb zur periodischen Einstellung des Durchflussregelventils 2 eine Vorlauftemperatur T_{Vorlauf} unterhalb von 17°C erfasst, wird das Durchflussregelventil 2 geschlossen, um Probleme durch eine Kondensation von Luftfeuchtigkeit an Oberflächen einer Installation zu verhindern.

Danach wird periodisch, beispielsweise alle 15 min. überprüft, ob die Vorlauftemperatur T_{Vorlauf} weiterhin weniger als 17°C beträgt. Wenn die Vorlauftemperatur T_{Vorlauf} weiterhin weniger als 17°C beträgt, wird die geschlossene Einstellung des in Fig. 3 dargestellten Durchflussregelventils 2 beibehalten. Wenn die Vorlauftemperatur T_{Vorlauf} 17°C wieder überschreitet, liegt sie nicht mehr in dem vorbestimmten unteren Wertebereich Wu kritischer Temperaturen und infolgedessen wird eine Drosselung auf die geschlossene Einstellung des Durchflussregelventils 2 beendet.

Wenn die Vorlauftemperatur T_{Vorlauf} zwischen 17°C und 22°C beträgt, führt das Temperierungssystem 10 einen Kühlbetrieb durch, und die Einstellvorrichtung 1 führt eine Regelung zur periodischen Einstellung des Durchflussregelventils 2 durch. Dabei folgt die Einstellung einer Regeldifferenz ΔT_{Regeldifferenz}, die zwischen einer tatsächlichen Temperaturdifferenz ΔT_{Ist} und einer Temperaturspreizung ΔT_{Soll}, die sich beide auf die eingangsseitige Vorlauftemperatur T_{Vorlauf} und die ausgangsseitige Rücklauftemperatur T_{Rücklauf} beziehen, gebildet wird. Die Temperaturspreizung ΔT_{Soll} kann ein vorbestimmter konstanter Differenzwert sein, oder gemäß der beschriebenen Ausführungsform, ein variabel bestimmter Differenzwert sein. In dem Temperaturbereich des Kühlbetriebs sind in dem Diagramm zwei Kurven eingezeichnet, die eine beispielhafte Untergrenze und Obergrenze darstellen, innerhalb der die variable Temperaturspreizung ΔT_{Soll} durch eine Regelung der Einstellvorrichtung 1 bestimmt wird.

Während der Regelung zur periodischen Einstellung des Durchflussregelventils 2 im Kühlbetrieb des Temperierungssystems 10 wird beispielsweise alle 10 min. überprüft, ob die Vorlauftemperatur T_{Vorlauf} weiterhin zwischen 17°C und 22°C beträgt. Wenn die Vorlauftemperatur T_{Vorlauf} weiterhin zwischen 17°C und 22°C beträgt, wird dieselbe Regelung im Kühlbetrieb fortgeführt.

Wenn die Vorlauftemperatur T_{Vorlauf} zwischen 22°C und 24,5°C beträgt, liegt sie in einem vorbestimmten mittleren Wertebereich W_{M} kritischer Temperaturen. Sobald die Einstellvorrichtung 1 in einem Regelungsbetrieb zur periodischen Einstellung des Durchflussregelventils 2 eine Vorlauftemperatur T_{Vorlauf} zwischen 22°C und 24,5°C erfasst, wird das Durchflussregelventil 2 auf einen Durchflussquerschnitt von 15% in Bezug auf einen vollständig geöffneten Durchflussquerschnitt gedrosselt, um einen Energieaufwand zur Umwälzung des Wärmeträgers während einer unwirksamen Temperaturdifferenz eines Wärmeübergangs zu verringern.

Da während der konstanten Drosselung keine Bestimmung einer Temperaturspreizung ΔT_{Soll} durch die Regelung erforderlich ist und auch nicht ausgeführt wird, sind in dem Diagramm in diesem Abschnitt sowie den anderen Abschnitten der vorbestimmten Wertebereiche (Wu, W_{M}, Wo) keine Werte einer Kurve aufgetragen.

Danach wird periodisch, beispielsweise alle 15 min. überprüft, ob die Vorlauftemperatur T_{Vorlauf} weiterhin zwischen 22°C und 24,5°C beträgt. Wenn die Vorlauftemperatur T_{Vorlauf} weiterhin zwischen 22°C und 24,5°C beträgt, wird die Einstellung eines Durchflussquerschnitts von 15% beibehalten. Wenn die Vorlauftemperatur T_{Vorlauf} 22°C unterschreitet oder 24,5°C überschreitet, liegt sie nicht mehr in dem vorbestimmten mittleren Wertebereich W_{M} kritischer Temperaturen und infolgedessen wird die Drosselung auf einen Durchflussquerschnitts des Durchflussregelventils 2 von 15% beendet.

Wenn die Vorlauftemperatur T_{Vorlauf} zwischen 22°C und 60°C beträgt, führt das Temperierungssystem 10 einen Heizbetrieb durch, und die Einstellvorrichtung 1 führt eine Regelung zur periodischen Einstellung des Durchflussregelventils 2 durch. Dabei folgt die Einstellung erneut der Regeldifferenz ΔT_{Regeldifferenz} zwischen der tatsächlichen Temperaturdifferenz ΔT_{Ist} und einer konstanten oder variablen Temperaturspreizung ΔT_{Soll}, die sich beide auf die eingangsseitige Vorlauftemperatur T_{Vorlauf} und die ausgangsseitige Rücklauftemperatur T_{Rücklauf} beziehen. In dem Temperaturbereich des Heizbetriebs sind in dem Diagramm zwei Kurven eingezeichnet, die eine beispielhafte Untergrenzen und Obergrenze darstellen, innerhalb der die variable Temperaturspreizung ΔT_{Soll} durch eine Regelung der Einstellvorrichtung 1 bestimmt wird.

Während einer Regelung zur periodischen Einstellung des Durchflussregelventils 2 im Heizbetrieb des Temperierungssystems 10 wird beispielsweise alle 10 min. überprüft, ob die Vorlauftemperatur T_{Vorlauf} weiterhin zwischen 22°C und 60°C beträgt. Wenn die Vorlauftemperatur T_{Vorlauf} weiterhin zwischen 22°C und 60°C beträgt, wird dieselbe Regelung im Heizbetrieb fortgeführt.

Wenn die Vorlauftemperatur T_{Vorlauf} größer als 60°C ist, liegt sie in einem vorbestimmten oberen Wertebereich Wo kritischer Temperaturen. Sobald die Einstellvorrichtung 1 in einem Regelungsbetrieb zur periodischen Einstellung des Durchflussregelventils 2 eine Vorlauftemperatur T_{Vorlauf} oberhalb von 60°C erfasst, wird das Durchflussregelventil 2 geschlossen, um Probleme durch Wärmeausdehnungen unterschiedlicher Baustoffe zu verhindern.

Danach wird periodisch, beispielsweise alle 15 min. überprüft, ob die Vorlauftemperatur T_{Vorlauf} weiterhin mehr als 60°C beträgt. Wenn die Vorlauftemperatur T_{Vorlauf} weiterhin mehr als 60°C beträgt, wird die geschlossene Einstellung des Durchflussregelventils 2 beibehalten. Wenn die Vorlauftemperatur T_{Vorlauf} 60°C wieder unterschreitet, liegt sie nicht mehr in dem vorbestimmten oberen Wertebereich Wo kritischer Temperaturen und infolgedessen wird eine Drosselung auf die geschlossene Einstellung des Durchflussregelventils 2 beendet und die Regelung im Heizbetrieb wieder fortgeführt.

Die vorbestimmten Wertebereiche Wu, W_{M} und Wo sowie die vorbestimmten Öffnungspositionen zur Drosselung des Durchflussquerschnitts bzw. dementsprechende Werte oder Daten zur elektrischen Ansteuerung derselben sind in einem Speichermittel der Einstellvorrichtung 1 vorab gespeichert.

Wenn das Temperierungssystem 10 dazu eingerichtet ist, einen optionalen Kühlbetrieb durch eine Kältequelle bereitzustellen, ist es ebenso vorgesehen, dass ein Thermostat 12 über einen Heizmodus und einen Kühlmodus verfügt. Dabei kann eine manuelle Umstellung durch den Nutzer, eine Umstellung durch ein eingehendes Signal von einer Komponente aus dem Temperierungssystem 10 oder eine sonstige selbständige Erkennung des Thermostats 12 zwischen dem Heizmodus und dem Kühlmodus erfolgen. Entscheidend ist, dass das Thermostat 12 in einem Heizmodus nur dann ein Aktivierungssignal an die Einstellvorrichtung 1 ausgibt, wenn eine positive Differenz zwischen einer vorgebbaren Raumtemperatur T_{Raum-Soll} und der tatsächlichen Raumtemperatur T_{Raum-Ist} vorliegt, und dass das Thermostat 12 in einem Kühlmodus nur dann das Aktivierungssignal ausgibt, wenn eine negative Differenz zwischen einer vorgebbaren Raumtemperatur T_{Raum-Soll} und der tatsächlichen Raumtemperatur T_{Raum-Ist} vorliegt. Diese Bedingung trifft beispielsweise zu, wenn das Aktivierungssignal keine Daten beinhaltet, sondern ein stets gleichartiges Signal ist bzw. einen konstanten Signalpegel oder Spannung über eine Aktivierungsdauer darstellt.

Ebenso ist in dem Fall einer Regelung in der nachstehenden Ausführungsform, bei der eine Bestimmung einer variablen Temperaturspreizung ΔT_{Soll} erfolgt, eine Berücksichtigung einer Vorzeichenänderung der Differenz zwischen einer vorgebbaren Raumtemperatur T_{Raum-Soll} und der tatsächlichen Raumtemperatur T_{Raum-Ist} vorgesehen. Zudem kann in der nachstehenden Ausführungsform in der Regelung im Heizbetrieb und in der Regelung im Kühlbetrieb jeweils eine Bestimmung einer anderen variablen Temperaturspreizung ΔT_{Soll} bzw. eine andere Bestimmung einer variablen Temperaturspreizung ΔT_{Soll} vorgesehen sein.

Erfindungsgemäß wird die Drosselung des Durchflussquerschnitts, die zusammen mit den Figuren 1 und 2 beschrieben wurde, durch dieselbe Technik umgesetzt, welche auch die Regelung und periodische Einstellung des Durchflussquerschnitts in der nachstehenden Ausführungsform durchführt, wenn die Vorlauftemperatur T_{Vorlauf} nicht in einem vorbestimmten Wertebereiche Wu, W_{M} oder Wo liegt.

Nachfolgend wird mit den Figuren 3 bis 5 Bezug auf eine geeignete Ausführungsform aus der genannten Technik genommen, die Gegenstand von nebengeordneten Ansprüchen ist.

Die Einstellvorrichtung 1 ist auf einem Durchflussregelventil 2 montiert. Die Einstellvorrichtung 1 ist mittels eines Flansches 27 am Durchflussregelventil 2 befestigt. Das Durchflussregelventil 2 ist seinerseits in der hier abgebildeten Ausführungsform in einen Rücklaufverteiler 14 eingebaut. Der Rücklaufverteiler 14 weist ein in ihn eingeschraubtes Anschlussstück 18 auf, das den Rücklaufverteiler 14 mit einer nicht näher dargestellten Verbraucherschleife 3 verbindet. Das Durchflussregelventil 2 kann auch anderweitig in den Rücklaufverteiler 14 eingebaut sein. Das Anschlussstück 18 kann in den Rücklaufverteiler 14 auch eingepresst, eingeklebt, eingelötet, angeschweißt oder anderweitig befestigt sein.

Die Einstellvorrichtung 1 umfasst ein elektrisch ansteuerbares Stellglied 6. Im vorliegenden Beispiel fallen die Längsachse der Einstellvorrichtung 1 und des Stellglieds 6 zusammen. Das elektrisch ansteuerbare Stellglied 6 enthält ein in axialer Richtung bewegliches Betätigungsmittel 20. Die Längsachse des Betätigungsmittels 20 fällt ebenfalls mit der Längsachse des elektrisch ansteuerbaren Stellgliedes 6 zusammen. Das Betätigungsmittel 20 ist innerhalb des elektrisch ansteuerbaren Stellgliedes 6 angeordnet, weist ein in axialer Richtung längenveränderbares Bauteil 21, beispielsweise ein Dehnstoffelement 21, insbesondere eine Wachspatrone, auf, und ist durch eine koaxial dazu konzentrisch angeordnete Spiralfeder 22 vorgespannt. Das längenveränderbare Bauteil 21 kann auch als elektrischer Miniaktuator ausgebildet sein, wenngleich diese häufig aus Kostengründen und wegen der vermuteten Geräuschentwicklung eher nicht erwogen werden. Statt der Spiralfeder 22 kann auch ein anderes geeignetes Mittel, beispielsweise ein Ringfederpaket oder dergleichen, eine Vorspannung erzeugen.

Durch elektrische Leitungen 7 erhält das elektrisch ansteuerbare Stellglied 6 Signale von einem nicht näher dargestellten Temperatursensor am Rücklaufverteiler 14 hinsichtlich der ausgangsseitigen Rücklauftemperatur T_{Rücklauf} des durchfließenden Wärmeträgers. Das elektrisch ansteuerbare Stellglied 6 erhält über die Leitungen 7 auch Temperatursignale von einem Temperatursensor am hier nicht dargestellten Vorlaufverteiler 13 hinsichtlich einer eingangsseitigen Vorlauftemperatur T_{Vorlauf} des durchfließenden Wärmeträgers. Eine weitere elektrische Leitung 9 bildet in der vorliegenden Ausführungsform eine Schnittstelle zu einem in Fig. 3 nicht, jedoch in Fig. 4 dargestellten Thermostat 12.

In der Einstellvorrichtung 1 enthaltene Berechnungsmittel 8 verarbeiten die über die Leitungen 7 und 9 erhaltenen Signale und geben an das elektrisch ansteuerbare Stellglied 6 entsprechende Befehle oder Steuersignale aus, anhand derer das Dehnstoffelement 21 im Betätigungsmittel 20 aktiviert oder deaktiviert wird. Auf diese Weise wird letztendlich ein definierter Verstellweg oder Hub des Betätigungsmittels 20 in axialer Richtung realisiert. Dabei drückt das Betätigungsmittel 20 in axialer Richtung auf einen Betätigungsstift 23 des Durchflussregelventils 2 und betätigt damit selbiges. In der vorliegenden Ausführungsform fallen die Längsachse des Betätigungsmittels 20 und des Betätigungsstiftes 23 wie auch des Durchflussregelventils 2 zusammen.

Über die axiale Betätigung des Ventilstiftes 23 wird ein in der beispielhaften Ausführungsform als Ventilteller 24 ausgebildeter Ventilkopf von einem Ventilsitz 25 abgehoben und damit eine Ventilstellung definiert, die einer bestimmten Öffnungsposition des Durchflussregelventils 2 bzw. einem bestimmten Ventil-Öffnungsquerschnitt entspricht.

Der jeweilige Hub des Durchflussregelventils 2 bzw. der hieraus resultierende Öffnungsquerschnitt wird über ein Positionserfassungsmittel 15 in der Einstellvorrichtung 1 erfasst. Das Positionserfassungsmittel 15 besteht in der vorliegenden Ausführungsform aus einem Magneten 16, der über einen radial nach außen ragenden Ausleger 26 dem elektrisch ansteuerbaren Stellglied 6 zugeordnet und mit dem Betätigungsmittel 20 verbunden ist. Auf diese Weise bewegt sich der Magnet 16 in axialer Richtung parallel zum Dehnstoffelement 21 bzw. parallel zum Ventilteller 24, macht mit diesen denselben Hub bzw. Verstellweg mit, und dient als Referenz für den jeweiligen Hub. Ein dem Magnet 16 gegenüber angeordneter Hallsensor 17 ist weiterer Bestandteil des Positionserfassungsmittels 15. Mit dem Hallsensor 17 wird die Position wie auch die Bewegung bzw. der Hub des Magneten 16 erfasst und hierüber der Hub des Ventiltellers 24 gegenüber des Ventilsitzes 25 erfasst bzw. letztendlich der Querschnitt des Durchflussregelventils 2 bestimmt.

Die in Fig. 3 dargestellte Einstellvorrichtung 1 ist in mehrfacher Ausfertigung in dem in Fig. 4 erläuterten Temperierungssystem 10 verbaut. Die beispielhafte Ausführungsform des Temperierungssystems 10 gemäß Fig. 4 enthält eine Verteilervorrichtung 11 mit drei Einstellvorrichtungen 1, die mittels jeweiligen Flansch 27 auf dem jeweils zugeordneten Durchflussregelventil 2 montiert sind. Die jeweiligen Durchflussventile 2 sind in den einen Rücklaufverteiler 14 eingebaut. Auf der gegenüberliegenden Seite der Einstellvorrichtung 1 bzw. auf der in Einbaurichtung betrachteten Unterseite des Rücklaufverteilers 14 weist dieser jeweils ein Anschlussstück 18 auf, über welches die Verbindung zur jeweiligen Verbraucherschleife 3 hergestellt ist. Dabei bildet die jeweilige Verbraucherschleife 3 einen jeweiligen Wärmetauscher 30 aus. Am Anschlussstück 18 ist jeweils ein Temperaturerfassungsmittel 7, beispielsweise ein Rücklauftemperatursensor 7b, angebracht, insbesondere angeklipst oder aufgeklebt. Mit dem Rücklauftemperatursensor 7b wird die jeweilige ausgangsseitige Rücklauftemperatur T_{Rücklauf} des durch die jeweilige Verbraucherschleife 3 strömenden Wärmeträgers erfasst. Der Rücklauftemperatursensor 7b könnte auch an einer anderen geeigneten Stelle zur Erfassung der jeweiligen Rücklauftemperatur angebracht sein, beispielsweise unmittelbar nach dem Anschlussstück 18 an der Rohrwandung der linienhaft dargestellten Verbraucherschleife 3.

Das Temperierungssystem 10 weist ferner einen Vorlaufverteiler 13 auf. Der Vorlaufverteiler 13 enthält in der beispielhaften Ausführungsform drei Anschlussstücke 28 für die drei dargestellten Verbraucherschleifen 3. Ein Temperaturerfassungsmittel 7 ist abermals an jedem Anschlussstück 28 angebracht, beispielsweise ein Vorlauftemperatursensor 7a, um die jeweilige eingangsseitige Vorlauftemperatur T_{Vorlauf} des durch die jeweilige Verbraucherschleife 3 strömenden Wärmeträgers zu erfassen. Der Vorlauftemperatursensor 7a könnte auch an einer anderen geeigneten Stelle zur Erfassung der jeweiligen Vorlauftemperatur angebracht sein, beispielsweise unmittelbar nach dem Anschlussstück 28 an der Rohrwandung der linienhaft dargestellten Verbraucherschleife 3.

Der Vorlaufverteiler 13 ist mit dem Rücklaufverteiler 14 über eine Leitung 29 verbunden, die eine Temperierungsquelle 4 und eine Pumpe 5 enthält. Mit der Pumpe 5 kann der flüssige Wärmeträger, der von der Temperierungsquelle 4 mit Wärmeenergie aufgeladen oder ggf. gekühlt wurde, umgewälzt werden. Der durchfließende Wärmeträger wird von der Pumpe 5 zum Vorlaufverteiler 13 transportiert, dort strömt der Wärmeträger in die hier dargestellten drei Verbraucherschleifen 3 und durch diese hindurch zum Rücklaufverteiler 14 zurück, wobei die jeweilige Durchflussmenge durch den Durchflussquerschnitt des jeweiligen Durchflussregelventils 2, die im Rücklaufverteiler 14 verbaut sind, bestimmt wird. Vom Rücklaufverteiler 14 strömt das dort zusammengefasste durchfließende Wärmeträgermedium wieder zurück zur Pumpe 5 bzw. zur Temperierungsquelle 4.

Ein der jeweiligen Verbraucherschleife 3 zugeordnetes Thermostat 12 gibt ein Ansteuerungssignal aus, wenn ein Temperierungsbedarf besteht. Das Ansteuerungssignal wird vom Thermostat 12 beispielsweise über eine Schnittstelle 9, hier ein Kabel, zur Einstellvorrichtung 1 übertragen. Die Schnittstelle 9 könnte aber auch als eine drahtlose Verbindung ausgebildet sein. Die jeweilige Einstellvorrichtung 1 bestimmt mittels der jeweiligen Berechnungsmittel 8 in Abhängigkeit vom Aktivierungssignal oder Deaktivierungssignal des jeweiligen Thermostaten 12 und den jeweils zugeordneten Signalen bzw. Daten der Vorlauf- und der Rücklauftemperatur den jeweiligen Öffnungsquerschnitt des jeweiligen Durchflussregelventils 2.

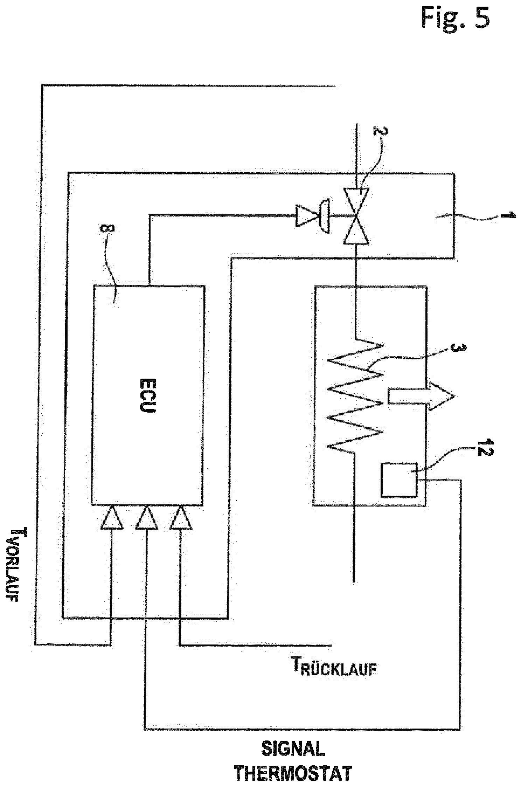

Die im Temperierungssystem 10 gemäß Fig. 4 verbauten Einstellvorrichtungen 1 gemäß Fig. 3 sind in Fig. 5 noch einmal in einem Blockschaltbild, das die Systemkomponenten zur Selbstregulierung darstellt, veranschaulicht.

Wärme oder Kälte werden von der Verbraucherschleife 3 an die Umgebung abgegeben. Ein Thermostat 12, insbesondere ein Raumthermostat in einem Wohnraum eines Gebäudes, gibt ein Signal aus. Das Signal vom Thermostat 12 wird einer ECU der Einstellvorrichtung 1 übergeben. Die ECU erhält ferner Temperatursignale bzw. Daten, wie beispielsweise die Rücklauftemperatur T_{Rücklauf} und die Vorlauftemperatur T_{Vorlauf}. Ein Berechnungsmittel 8, das die ECU enthält, ist dazu eingerichtet, eine elektrische Ansteuerung des hier nicht näher dargestellten Stellgliedes 6 der Einstellvorrichtung 1 vorzunehmen, um einen Hub des Ventils zu realisieren, bzw. die einer einem bestimmten Durchflussquerschnitt zugeordnete, vorbestimmte Öffnungsposition des Durchflussregelventils 2 einzustellen.

Der Öffnungsquerschnitt des Ventils 2 bzw. dessen Hub wird basierend auf einer Regeldifferenz ΔT_{Regeldifferenz} berechnet, wobei die zu berechnende Regeldifferenz ΔT_{Regeldifferenz} zwischen einer Temperaturdifferenz ΔT_{Ist} aus der erfassten eingangsseitigen Vorlauftemperatur T_{Vorlauf} und der ausgangsseitigen Rücklauftemperatur T_{Rücklauf} und einer vorbestimmten Temperaturspreizung ΔT_{Soll} von der ausgangsseitigen Rücklauftemperatur T_{Rücklauf} zu der eingangsseitigen Vorlauftemperatur T_{Vorlauf} gebildet wird.

Die Einstellvorrichtung 1 umfasst ferner ein hier nicht weiter dargestelltes Zeiterfassungsmittel und ein Speichermittel, die dazu eingerichtet sind, eine vorangegangene oder aktuelle Aktivierungsdauer des Aktivierungssignals vom Thermostat 12 und/oder eine Deaktivierungsdauer zwischen zwei Aktivierungen oder Deaktivierungen zu erfassen und zu speichern, wobei das Berechnungsmittel 8 mit der darin enthaltenen ECU dazu eingerichtet ist, die Temperaturspreizung ΔT_{Soll} basierend auf einer Aktivierungsdauer und/oder einer Deaktivierungsdauer variabel zu bestimmen.

### Alternative Aspekte zur Ausführung der geeigneten Technik

Nachfolgend werden weitere Aspekte und Alternativen der Einstellvorrichtung 1 des Verfahrens oder eines entsprechenden Temperierungssystems 10 und Baugruppen desselben genannt.

Das Thermostat 12 des Temperierungssystems 10, das in einem Raum angeordnet ist, kann ein Eingabemittel zur Eingabe eines Wertes, der für eine vorgebbare Raumtemperatur bezeichnend ist, und eine Schnittstelle 9 zum Ausgeben eines Aktivierungssignals für wenigstens eine Verbraucherschleife 3 in dem Raum aufweisen.

Das Thermostat 12 des Temperierungssystems 10 kann dazu eingerichtet sein, auf eine tatsächliche Raumtemperatur anzusprechen, indem das Thermostat 12 das Aktivierungssignal ausgibt, solange eine Abweichungstoleranz zwischen der vorgebbaren Raumtemperatur und der tatsächlichen Raumtemperatur überschritten wird.

Eine Aktivierung nach Definition der vorliegenden Offenbarung ist ein Einschaltzustand oder eine Inbetriebnahme aus einem Standby-Modus der Einstellvorrichtung 1 oder zumindest des Berechnungsmittels 8 in der Einstellvorrichtung 1, der bzw. die durch einen kontinuierlichen Signalpegel gestützt, durch einen Signalimpuls getriggert, oder eine in Form eines Signals angelegte Steuerspannung bzw. Ansteuerspannung zur Schaltung eines Transistors an einer Leistungsversorgung, eine in Form eines Signals direkt zugeführte Leistungsversorgung oder dergleichen ausgelöst wird. Eine Aktivierungsdauer bezieht sich definitionsgemäß auf die Zeitdauer vom Anfang bis zum Ende des dementsprechend ausgelösten Einschaltzustands oder der Inbetriebnahme aus einem Standby-Modus bzw. der Empfangsdauer eines kontinuierlichen Signalpegels, Steuerspannung, Ansteuerspannung oder Leistungszufuhr, oder der Zeitdauer zwischen zwei Signalimpulsen, die einen Einschaltvorgang und einen Abschaltvorgang bewirken. Eine Deaktivierung und eine Deaktivierungsdauer sind demgemäß der komplementäre Zustand und Zeitdauer, in dem bzw. in der kein Betrieb der Einstellvorrichtung 1 vorliegt oder zumindest keine Berechnung des Berechnungsmittels 8 oder Ansteuerung des Stellglieds 6 erfolgt.

Die Einstellvorrichtung 1 kann dazu eingerichtet sein, während einer Aktivierungsdauer die durch das Berechnungsmittel 8 berechnete elektrische Ansteuerung an das Stellglied 6 auszugeben, und während einer Deaktivierungsdauer keine elektrische Ansteuerung oder eine vorbestimmte elektrische Ansteuerung, die der geschlossenen Position des Durchflussregelventils 2 entspricht, an das Stellglied 6 auszugeben. Dadurch erfolgt je nach Typ des Stellglieds 6 eine Absperrung der Verbraucherschleife 3 nach einem Heizvorgang, sodass eine übermäßige Energiezufuhr bzw. eine Überschwingen der Temperaturregelung verhindert wird.

Die Einstellvorrichtung 1 kann dazu eingerichtet sein, während einer Deaktivierungsdauer eine elektrische Leistungszufuhr zu dem Berechnungsmittel 8 und/oder zu der Einstellvorrichtung 1 auszuschalten. Dadurch wird in den Deaktivierungsdauern, die sich z.B. auch über einen Sommer erstrecken können, Strom eingespart.

Das Berechnungsmittel 8 kann dazu eingerichtet sein, zumindest einen Wert einer vorangegangenen Öffnungsposition des Durchflussregelventils 2 in dem Speichermittel zu speichern. Dadurch kann bei Aktivierung der Einstellvorrichtung 1 zunächst eine Ventilstellung als Ausgangspunkt angefahren werden, die bereits im Laufe der vorherigen Heizdauern ermittelt wurde, und in der laufenden Heizdauer lediglich abweichend angepasst werden braucht.

Das Speichermittel kann einen vorab gespeicherten Referenzwert für die Aktivierungsdauer und/oder einen vorab gespeicherten Referenzwert für die Deaktivierungsdauer enthalten. Dadurch wird eine als komfortabel festgelegte Zeitdauer zur Erreichung einer vorgegebenen Temperatur als angestrebter Referenzwert hinterlegt, nach dem sich die Selbstregulierung richtet.

Das Speichermittel kann einen vorab gespeicherten Wertebereich für die Temperaturspreizung enthalten. Dadurch kann auf einfache Weise sichergestellt werden, dass der Betriebspunkt des Wärmetauschers 30 innerhalb eines energieeffizienten Bereichs gewählt wird.

Das Speichermittel kann ein vorab gespeichertes Kennfeld mit zugeordneten Werten von Aktivierungsdauern und/oder Deaktivierungsdauern und vorgegebenen Temperaturspreizungen zur Bestimmung der Temperaturspreizung enthalten. Dadurch kann eine vorbestimmte universelle Regelung mit geringerer Verarbeitungsleistung umgesetzt werden.

Das Speichermittel kann eine vorab gespeicherte Steuerungslogik zur Berechnung der Temperaturspreizung enthalten. Dadurch kann eine individuellere Regelung umgesetzt werden.

Die Einstellvorrichtung 1 kann dazu eingerichtet sein, die Temperaturspreizung in Abhängigkeit der Vorlauftemperatur zu verändern, und/oder die Einstellvorrichtung 1 kann dazu eingerichtet sein, eine Bandbreite der Temperaturspreizung in Abhängigkeit der Vorlauftemperatur zu verändern, und/oder die Einstellvorrichtung 1 kann dazu eingerichtet sein, über die Schnittstelle 9 weitere externe Signale mit Betriebsparametern aus dem Temperierungssystem 10 zu empfangen; und das Berechnungsmittel 8 dazu eingerichtet sein, die Temperaturspreizung in Abhängigkeit der Betriebsparameter anzupassen. Dadurch kann eine Regelung umgesetzt werden, die anhand einer Änderung der Vorlauftemperatur Witterungsschwankungen oder Jahresszeiten erfasst und einen effizienten Arbeitspunkt entsprechend anpasst oder weitere komfortorientierte Funktionen, die an einem multifunktionalen Raumthermostat vorgegeben werden können, in die Regelung mit einfließen lassen.

In einem Raum des Gebäudes können ein Thermostat 12 und zwei oder mehr Verbraucherschleifen 3 bzw. Heiz- oder Kühlkreise angeordnet sein. Dadurch ist es möglich große Räume durch mehrere installierte Heiz- oder Kühlschlangen mit standardisierten Durchmessern und einem in Summe geringeren Strömungswiderstand zu versorgen, die durch eigene Einstellvorrichtungen 1 jedoch denselben Raumthermostat geregelt werden.

Das Thermostat 12 kann ein Bimetall-Element aufweisen, das auf die tatsächliche Raumtemperatur anspricht und eine Ausgabe des Aktivierungssignals oder des Deaktivierungssignals betätigt. Dadurch wird eine besonders einfache, zuverlässige und kostengünstige Ausführung des Raumthermostats ohne Elektronik und Sensorik realisiert.

Das Aktivierungssignal oder Deaktivierungssignal kann ein binäres Signal sein, das einen Einschaltzustand mit einem Signalpegel oberhalb eines vorbestimmen Pegelwertes und einen Ausschaltzustand ohne Signalpegel oder einem Signalpegel unterhalb des vorbestimmen Pegelwertes umfasst. Dadurch wird ebenfalls eine besonders einfache und kostengünstige Ausführung der Signalerzeugung und der Signalerkennung realisiert.

Ein Thermostat 12 kann einen Mikrocomputer und einen Temperatursensor 7a, 7b zur Erfassung der tatsächlichen Raumtemperatur umfassen; wobei das Thermostat 12 einen Verlauf der tatsächlichen Raumtemperatur erfasst und speichert, während und/oder nachdem das Aktivierungssignal oder das Deaktivierungssignal ausgegeben wird; und das Thermostat 12 und eine Einstellvorrichtung 1 dazu eingerichtet sein, Daten zu einem Verlauf erfasster tatsächlicher Raumtemperaturen zu kommunizieren. Dadurch wird eine multifunktionale Ausführung des Temperierungssystems 10 realisiert, die eine adaptive Regelung an weitere komfortorientierte Parameter, wie eine Beeinflussung eines Heizkurvenverlaufs in Abhängigkeit einer Ausgangs- und Zieltemperatur und/oder einer Außentemperatur oder einer Uhrzeit oder dergleichen ermöglicht.

Das Aktivierungssignal und/oder das Deaktivierungssignal kann mittels drahtlosen Schnittstellen 9 von einem bestimmten Thermostat 12 zu einer zugeordneten Einstellvorrichtung 1 kommuniziert werden. Dadurch kann eine Verkabelung von dem Raumthermostat zu der Einstellvorrichtung 1 entfallen und ein Installationsaufwand verringert werden. Ferner kann über eine solche drahtlose Schnittstelle 9 ebenso eine Verbindung zwischen einem Smartphone, Tablet PC oder dergleichen und einer Einstellvorrichtung 1 oder einem Thermostat 12 aufgenommen werden, wodurch eine weitere Eingabemöglichkeit für den Nutzer zum System ermöglicht wird.

Es kann eine kleinere Temperaturspreizung bestimmt werden, wenn zumindest eine vorangegangene Aktivierungsdauer größer als ein Referenzwert ist, oder eine größere Temperaturspreizung bestimmt werden, wenn zumindest eine vorangegangene Aktivierungsdauer kleiner als der Referenzwert ist. Dadurch orientiert sich die Selbstregulierung an einer vorab als komfortabel festgelegten Zeitdauer zur Erreichung einer vorgegebenen Temperatur.

Die Temperaturspreizung kann basierend auf einem Verlauf aufeinander folgender, vorangegangener Aktivierungsdauern bestimmt werden. Dadurch wird eine bessere Anpassung der Selbstregulierung an Nutzerverhalten, Jahreszeiten und dergleichen ermöglicht.

Die Einstellvorrichtung 1 kann ein Positionserfassungsmittel 15 aufweisen, das derart ausgebildet ist, eine aktuelle Position des Stellglieds 6zu erfassen. Dadurch wird eine je nach Typ des Stellglieds 6 erforderliche Einhaltung eines vorgegebenen Stellwegs ermöglicht.

Das Positionserfassungsmittel 15 kann aus einem Magneten 16 und einem dem Magneten 16 zugeordneten Hallsensor 17 gebildet sein. Dadurch wird eine exakte Erfassung und Ausführung eines vorgegebenen Stellwegs ermöglicht.

Das Stellglied 6 kann durch verschiedene Arten von Aktoren bereitgestellt sein, deren Stellkraft auf einer elektromotorischen Leistung, einer Wärmeausdehnung, einer Federvorspannung oder dergleichen basiert, solange der Stellweg durch eine Ansteuerung seitens des Berechnungsmittels 8 ansteuerbar ist.

In den vorstehend diskutierten Figuren 3 bis 5 wurden die nachfolgend zusammenfassend aufgelisteten Bezugszeichen verwendet, wobei diese Auflistung keinen Anspruch auf Vollständigkeit erhebt:
- 1: Einstellvorrichtung;
- 2: Durchflussregelventil;
- 3: Verbraucherschleife;
- 4: Temperierungsquelle;
- 5: Pumpe;
- 6: elektrisch ansteuerbares Stellglied;
- 7: Temperaturerfassungsmittel;
- 7a: Vorlauftemperatursensor;
- 7b: Rücklauftemperatursensor;
- 8: Berechnungsmittel;
- 9: Schnittstelle;
- 10: Temperierungssystem;
- 11: Verteilervorrichtung;
- 12: Thermostat,
- 13: Vorlaufverteiler;
- 14: Rücklaufverteiler;
- 15: Positionserfassungsmittel;
- 16: Magnet;
- 17: Hallsensor;
- 18: Anschlussstück;
- 20: Betätigungsmittel;
- 21: Dehnstoffelement, insbesondere Wachspatrone;
- 22: Spiralfeder;
- 23: Ventilstift;
- 24: Ventilteller;
- 25: Ventilsitz;
- 26: Ausleger;
- 27: Flansch;
- 28: Anschlussstück;
- 29: Leitung;
- 30: Wärmetauscher;
- T_{Vorlauf}: eingangsseitige Vorlauftemperatur des durchfließenden Wärmeträgers;
- T_{Rücklauf}: ausgangsseitige Rücklauftemperatur des durchfließenden Wärmeträgers;
- ΔT_{Ist}: Temperaturdifferenz;
- ΔT_{Soll}: Temperaturspreizung;
- ΔT_{Regeldifferenz}: Temperatur-Regeldifferenz;
- T_{Raum-Soll}: vorgebbare Raumtemperatur;
- T_{Raum-Ist}: tatsächliche Raumtemperatur;

## Patentansprüche

1. Einstellvorrichtung (1) zur selbstregulierenden Einstellung eines Durchflussregelventils (2) einer Verbraucherschleife (3) mit Wärmetauscher (30), insbesondere in einem Temperierungssystem (10) für Gebäude mit einer Temperierungsquelle (4), einem flüssigen Wärmeträger und einer Pumpe (5), wobei die Einstellvorrichtung (1) aufweist:
ein Stellglied (6), das mit dem Durchflussregelventil (2) derart koppelbar eingerichtet ist, dass eine Öffnungsposition des Durchflussregelventils (2) zwischen einer geschlossenen Position und einer geöffneten Position, insbesondere graduell oder schrittweise, durch die Einstellvorrichtung (1) einstellbar und erfassbar ist;
ein Berechnungsmittel (8), das dazu eingerichtet ist, eine Ansteuerung des Stellglieds (6) basierend auf einer Regeldifferenz (ΔT_{Regeidifferenz}) zu berechnen;
ein Temperaturerfassungsmittel (7), das eine bezüglich der Verbraucherschleife (3) eingangsseitige Vorlauftemperatur (T_{Vorlauf}) erfasst;
**dadurch gekennzeichnet dass,**
die Einstellvorrichtung (1) dazu eingerichtet ist, das Durchflussregelventil (2) auf einen vorbestimmten kleineren Durchflussquerschnitt als denjenigen Durchflussquerschnitt, der basierend auf der Regeldifferenz (ΔT_{Regeidifferenz}) eingestellt wird, zu drosseln, wenn die erfasste eingangsseitige Vorlauftemperatur (T_{Vorlauf}) innerhalb eines vorbestimmten Wertebereichs (Wu, W_{M}, W_{O}) liegt.

2. Einstellvorrichtung (1) nach Anspruch 1, wobei:
das Stellglied (6) elektrisch ansteuerbar ist;
die Temperaturerfassungsmittel (7) eine ausgangsseitige Rücklauftemperatur (T_{Rücklauf}) des durchfließenden Wärmeträgers erfassen;
das Berechnungsmittel (8) dazu eingerichtet ist, eine elektrische Ansteuerung des Stellglieds (6), die einer - einem bestimmten Durchflussquerschnitt zugeordneten - vorbestimmten Öffnungsposition des Durchflussregelventils (2) entspricht,
basierend auf einer Regeldifferenz (ΔT_{Regeldifferenz}) zu berechnen, wobei die zu berechnende Regeldifferenz (ΔT_{Regeidifferenz}) zwischen
einer Temperaturdifferenz (ΔT_{Ist}) aus der erfassten eingangsseitigen Vorlauftemperatur (T_{Vorlauf}) und der ausgangsseitigen Rücklauftemperatur (T_{Rücklauf}), und einer vorbestimmten Temperaturspreizung (ΔT_{Soll}) von der ausgangsseitigen Rücklauftemperatur (T_{Rücklauf}) zu der eingangsseitigen Vorlauftemperatur (T_{Vorlauf}) gebildet wird;
wobei die Einstellvorrichtung (1) ferner eine Schnittstelle (9) zum Empfangen eines externen Aktivierungssignals zur Aktivierung des Berechnungsmittels (8) und/oder der Einstellvorrichtung (1) aufweist; wobei
die Einstellvorrichtung (1) ein Zeiterfassungsmittel und ein Speichermittel umfasst, die dazu eingerichtet sind, eine vorangegangene oder aktuelle Aktivierungsdauer des Aktivierungssignals und/oder eine Deaktivierungsdauer zwischen zwei Aktivierungen zu erfassen und zu speichern; und
das Berechnungsmittel (8) dazu eingerichtet ist, die Temperaturspreizung (ΔT_{Soll}) basierend auf einer Aktivierungsdauer und/oder einer Deaktivierungsdauer variabel zu bestimmen.

3. Einstellvorrichtung (1) nach Anspruch 1 oder 2, wobei
vorbestimmten Wertebereichen (Wu, W_{M}, Wo) konstante Drosselungen des Durchflussquerschnitts zugeordnet sind.

4. Einstellvorrichtung (1) nach einem der Ansprüche 1 bis 3, wobei
ein mittlerer geschlossener Wertebereich (W_{M}) der eingangsseitigen Vorlauftemperatur (T_{Vorlauf}) vorbestimmt ist, der mit 20°C bis 24°C eine behagliche Raumtemperatur abdeckt.

5. Einstellvorrichtung (1) nach einem der Ansprüche 1 bis 3, wobei
ein oberer offener Wertebereich (Wo) der eingangsseitigen Vorlauftemperatur (T_{Vorlauf}) vorbestimmt ist, dessen unterer Grenzwert zwischen 55°C und 60°C liegt und eine Schädigung von Baumaterialien ausschließt.

6. Einstellvorrichtung (1) nach einem der Ansprüche 1 bis 3, wobei
ein unterer offener Wertebereich (Wu) der eingangsseitigen Vorlauftemperatur (T_{Vorlauf}) vorbestimmt ist, dessen oberer Grenzwert zwischen 15°C und 17°C liegt und einen Taubildungspunkt einschließt.

7. Einstellvorrichtung (1) nach Anspruch 4, wobei
dem mittleren Wertebereich (W_{M}) eine konstante Drosselung zugeordnet ist, die einen Durchflussquerschnitt von 10% bis 20%, vorzugsweise 15% eines vollständig geöffneten Durchflussquerschnitts beträgt.

8. Einstellvorrichtung (1) nach Anspruch 5, wobei
dem oberen Wertebereich (Wo) eine konstante Drosselung zugeordnet ist, die einer vollständigen Schließung des Durchflussquerschnitts entspricht.

9. Einstellvorrichtung (1) nach Anspruch 6, wobei
dem unteren Wertebereich (Wu) eine konstante Drosselung zugeordnet ist, die einer vollständigen Schließung des Durchflussquerschnitts entspricht.

10. Einstellvorrichtung (1) nach einem der Ansprüche 1 bis 9, wobei
das Einstellen oder Drosseln des Durchflussquerschnitts in der Verbraucherschleife (3) periodisch erfolgt.

11. Einstellvorrichtung (1) nach Anspruch 10, wobei
eine Zeitdauer zwischen dem periodischen Einstellen oder Drosseln des Durchflussquerschnitts zwischen 5 min. und 15 min., vorzugsweise 10 min. beträgt, wenn die eingangsseitige Vorlauftemperatur (T_{Vorlauf}) außerhalb eines vorbestimmten Wertebereichs (W_{U}, W_{M}, Wo) liegt.

12. Einstellvorrichtung (1) nach Anspruch 10, wobei
eine Zeitdauer zwischen dem periodischen Einstellen oder Drosseln des Durchflussquerschnitts zwischen 10 min. und 20 min., vorzugsweise 15 min. beträgt, wenn die eingangsseitige Vorlauftemperatur (T_{Vorlauf}) innerhalb eines vorbestimmten Wertebereichs (W_{U}, W_{M}, Wo) liegt.

13. Verfahren zur selbstregulierenden Einstellung eines Durchflusses eines flüssigen Wärmeträgers durch eine Verbraucherschleife (3) mit Wärmetauscher (30) in einem Temperierungssystem (10) für Gebäude mit einer Temperierungsquelle (4) und einer Pumpe (5);
wobei das Verfahren zumindest die folgenden Schritte aufweist:
a) Einstellen eines verstellbaren Durchflussquerschnitts in der Verbraucherschleife (3) basierend auf einer Regeldifferenz ΔT_{Regeldifferenz});
b) Erfassen einer eingangsseitigen Vorlauftemperatur (T_{Vorlauf}) des durchlaufenden Wärmeträgers an der Verbraucherschleife (3);
**gekennzeichnet durch den Schritt:**
c) Drosseln auf einen vorbestimmten kleineren Durchflussquerschnitts als denjenigen Durchflussquerschnitt, der basierend auf der Regeldifferenz (ΔT_{Regeidifferenz}) eingestellt wird, wenn die erfasste eingangsseitige Vorlauftemperatur (T_{Vorlauf}) innerhalb eines vorbestimmten Wertebereichs (Wu, W_{M}, Wo) liegt.

14. Verfahren nach Anspruch 13, wobei die Verbraucherschleife (3) extern aktivierbar ist;
wobei das Verfahren ferner zumindest die folgenden Schritte aufweist:
a) Erfassen einer vorangegangenen oder aktuellen Aktivierungsdauer und/oder einer Deaktivierungsdauer der Verbraucherschleife (3);
b) Erfassen einer ausgangsseitigen Rücklauftemperatur (T_{Rücklauf}) des durchlaufenden Wärmeträgers an der Verbraucherschleife (3);
c) Bestimmen einer variablen Temperaturspreizung (ΔT_{Soll}) von der ausgangsseitigen Rücklauftemperatur (T_{Rücklauf}) zu der eingangsseitigen Vorlauftemperatur (T_{Vorlauf}) basierend auf der Aktivierungsdauer und/oder der Deaktivierungsdauer;
d) Berechnen einer Regeldifferenz (ΔT_{Regeidifferenz}) zwischen einer Temperaturdifferenz (ΔT_{Ist}) aus der erfassten eingangsseitigen Vorlauftemperatur (T_{Vorlauf}) und der ausgangsseitigen Rücklauftemperatur (T_{Rücklauf}), sowie der vorbestimmten Temperaturspreizung (ΔT_{Soll}); und
e) Berechnen und Einstellen eines verstellbaren Durchflussquerschnitts in der Verbraucherschleife (3) basierend auf der Regeldifferenz (ΔT_{Regeidifferenz}).

15. Verfahren nach Anspruch 13 oder 14, wobei
vorbestimmten Wertebereichen (Wu, W_{M}, Wo) konstante Drosselungen des verstellbaren Durchflussquerschnitts zugeordnet sind.

16. Verfahren nach einem der Ansprüche 13 bis 14, wobei
ein mittlerer geschlossener Wertebereich (W_{M}) der eingangsseitigen Vorlauftemperatur (T_{Vorlauf}) vorbestimmt ist, der mit 20°C bis 24°C eine behagliche Raumtemperatur abdeckt.

17. Verfahren nach einem der Ansprüche 13 bis 14, wobei
ein oberer offener Wertebereich (Wo) der eingangsseitigen Vorlauftemperatur (T_{Vorlauf}) vorbestimmt ist, dessen unterer Grenzwert zwischen 55°C und 60°C liegt und eine Schädigung von Baumaterialien ausschließt.

18. Verfahren nach einem der Ansprüche 13 bis 14, wobei
ein unterer offener Wertebereich (Wu) der eingangsseitigen Vorlauftemperatur (T_{Vorlauf}) vorbestimmt ist, dessen oberer Grenzwert zwischen 15°C und 17°C liegt und einen Taubildungspunkt einschließt.

19. Verfahren nach Anspruch 16, wobei
dem mittleren Wertebereich (W_{M}) eine konstante Drosselung zugeordnet ist, die einen Durchflussquerschnitt von 10% bis 20%, vorzugsweise 15% eines vollständig geöffneten Durchflussquerschnitts beträgt.

20. Verfahren nach Anspruch 17, wobei
dem oberen Wertebereich (Wo) eine konstante Drosselung zugeordnet ist, die einer vollständigen Schließung des Durchflussquerschnitts entspricht.

21. Verfahren nach Anspruch 18, wobei
dem unteren Wertebereich (Wu) eine konstante Drosselung zugeordnet ist, die einer vollständigen Schließung des Durchflussquerschnitts entspricht.

22. Verfahren nach einem der Ansprüche 13 bis 21, wobei
das Einstellen oder Drosseln des Durchflussquerschnitts in der Verbraucherschleife (3) periodisch erfolgt.

23. Verfahren nach Anspruch 22, wobei
eine Zeitdauer zwischen dem periodischen Einstellen oder Drosseln des Durchflussquerschnitts zwischen 5 min. und 15 min., vorzugsweise 10 min. beträgt, wenn die eingangsseitige Vorlauftemperatur (T_{Vorlauf}) außerhalb eines vorbestimmten Wertebereichs (Wu, W_{M}, Wo) liegt.

24. Verfahren nach Anspruch 22, wobei
eine Zeitdauer zwischen dem periodischen Einstellen oder Drosseln des Durchflussquerschnitts zwischen 10 min. und 20 min., vorzugsweise 15 min. beträgt, wenn die eingangsseitige Vorlauftemperatur (T_{Vorlauf}) innerhalb eines vorbestimmten Wertebereichs (Wu, W_{M}, Wo) liegt.

## Claims

1. Adjustment apparatus (1) for self-regulating adjustment of a flow control valve (2) of a consumer loop (3) comprising a heat exchanger (30), in particular in a temperature regulating system (10) for buildings having a temperature regulating source (4), a liquid heating medium and a pump (5), wherein the adjustment apparatus (1) comprises:
an actuator (6) which is configured so as to be able to be coupled to the flow control valve (2) such that an opening position of the flow control valve (2) can be adjusted and detected between a closed position and an open position, in particular gradually or in steps, by means of the adjustment apparatus (1);
a calculation means (8) which is configured to calculate an activation of the actuator (6) based upon a control difference (ΔT_{control difference}),
a temperature detection means (7) which detects a supply temperature (T_{supply}) which is on the input side in relation to the consumer loop (3);
**characterised in that**
the adjustment apparatus (1) is configured to restrict the flow control valve (2) to a predetermined smaller flow cross-section than the particular flow cross-section which is adjusted based upon the control difference (ΔT_{control difference}), if the detected input-side supply temperature (T_{supply}) is within a predetermined value range (W_{U}, W_{M}, Wo).

2. Adjustment apparatus (1) as claimed in claim 1, wherein:
the actuator (6) is electrically activatable;
the temperature detection means (7) detect an output-side return temperature (Tᵣₑₜᵤᵣₙ) of the through-flowing heating medium;
the calculation means (8) is configured to calculate an electrical activation of the actuator (6) which corresponds to a predetermined opening position of the flow control valve (2) - allocated to a specific flow cross-section - based upon a control difference (ΔT_{control difference}), wherein the control difference (ΔT_{control difference}), which is to be calculated, between
a temperature difference (ΔT_{actual}) is formed from the detected input-side supply temperature (T_{supply}) and the output-side return temperature (Tᵣₑₜᵤᵣₙ) and a predetermined temperature spread (ΔT_{desired}) from the output-side return temperature (Tᵣₑₜᵤᵣₙ) to the input-side supply temperature (T_{supply});
wherein the adjustment apparatus (1) further comprises an interface (9) for receiving an external activation signal for activating the calculation means (8) and/or the adjustment apparatus (1); wherein
the adjustment apparatus (1) comprises a time detection means and a storage means which are configured to detect and store a preceding or current activation period of the activation signal and/or a deactivation period between two activations; and
the calculation means (8) is configured to variably determine the temperature spread (ΔT_{desired}) based upon an activation period and/or a deactivation period.

3. Adjustment apparatus (1) as claimed in claim 1 or 2, wherein
constant restrictions of the flow cross-section are allocated to predetermined value ranges (Wu, W_{M}, Wo).

4. Adjustment apparatus (1) as claimed in any one of claims 1 to 3, wherein
a middle closed value range (W_{M}) of the input-side supply temperature (T_{supply}) is predetermined which at 20°C to 24°C covers a comfortable room temperature.

5. Adjustment apparatus (1) as claimed in any one of claims 1 to 3, wherein
an upper open value range (Wo) of the input-side supply temperature (T_{supply}) is predetermined, the lower limit value of which is between 55°C and 60°C and precludes any damage to construction materials.

6. Adjustment apparatus (1) as claimed in any one of claims 1 to 3, wherein
a lower open value range (Wu) of the input-side supply temperature (T_{supply}) is predetermined, the upper limit value of which is between 15°C and 17°C and includes a dew formation point.

7. Adjustment apparatus (1) as claimed in claim 4, wherein
the middle value range (W_{M}) can be allocated a constant restriction which amounts to a flow cross-section of 10% to 20%, preferably 15% of a completely open flow cross-section.

8. Adjustment apparatus (1) as claimed in claim 5, wherein
the upper value range (Wo) is allocated a constant restriction which corresponds to a complete closure of the flow cross-section.

9. Adjustment apparatus (1) as claimed in claim 6, wherein
the lower value range (W_{U}) is allocated a constant restriction which corresponds to a complete closure of the flow cross-section.

10. Adjustment apparatus (1) as claimed in any one of claims 1 to 9, wherein
the flow cross-section is adjusted or restricted periodically in the consumer loop (3).

11. Adjustment apparatus (1) as claimed in claim 10, wherein
a time period between the periodic adjustment or restriction of the flow cross-section is between 5 min. and 15 min., preferably 10 min., if the input-side supply temperature (T_{supply}) is outside a predetermined value range (Wu, W_{M}, Wo).

12. Adjustment apparatus (1) as claimed in claim 10, wherein
a time period between the periodic adjustment or restriction of the flow cross-section is between 10 min. and 20 min., preferably 15 min., if the input-side supply temperature (T_{supply}) is within a predetermined value range (Wu, W_{M}, Wo).

13. Method for self-regulating adjustment of a flow of a liquid heating medium through a consumer loop (3) comprising a heat exchanger (30) in a temperature regulating system (10) for buildings having a temperature regulating source (4) and a pump (5);
wherein the method comprises at least the steps of:
a) adjusting an adjustable flow cross-section in the consumer loop (3) based upon a control difference (ΔT_{control difference});
b) detecting an input-side supply temperature (T_{supply}) of the through-flowing heating medium at the consumer loop (3);
**characterised by the step of:**
c) restricting to a predetermined smaller flow cross-section than the particular flow cross-section which is adjusted based upon the control difference (ΔT_{control difference}), if the detected input-side supply temperature (T_{supply}) is within a predetermined value range (Wu, W_{M}, Wo).

14. Method as claimed in claim 13, wherein the consumer loop (3) is externally activatable;
wherein the method further comprises at least the steps of:
a) detecting a preceding or current activation period and/or a deactivation period of the consumer loop (3);
b) detecting an output-side return temperature (Tᵣₑₜᵤᵣₙ) of the through-flowing heating medium at the consumer loop (3);
c) determining a variable temperature spread (ΔT_{desired}) from the output-side return temperature (Tᵣₑₜᵤᵣₙ) to the input-side supply temperature (T_{supply}) based upon the activation period and/or the deactivation period;
d) calculating a control difference (ΔT_{control} difference) between a temperature difference (ΔT_{actual}) from the detected input-side supply temperature (T_{supply}) and the output-side return temperature (Tᵣₑₜᵤᵣₙ), as well as the predetermined temperature spread (ΔT_{desired}); and
e) calculating and adjusting an adjustable flow cross-section in the consumer loop (3) based upon the control difference (ΔT_{control difference}).

15. Method as claimed in claim 13 or 14, wherein
constant restrictions of the adjustable flow cross-section are allocated to predetermined value ranges (Wu, W_{M}, Wo).

16. Method as claimed in any one of claims 13 to 14, wherein
a middle closed value range (W_{M}) of the input-side supply temperature (T_{supply}) is predetermined which at 20°C to 24°C covers a comfortable room temperature.

17. Method as claimed in any one of claims 13 to 14, wherein
an upper open value range (Wo) of the input-side supply temperature (T_{supply}) is predetermined, the lower limit value of which is between 55°C and 60°C and precludes any damage to construction materials.

18. Method as claimed in any one of claims 13 to 14, wherein
a lower open value range (Wu) of the input-side supply temperature (T_{supply}) is predetermined, the upper limit value of which is between 15°C and 17°C and includes a dew formation point.

19. Method as claimed in claim 16, wherein
the middle value range (W_{M}) can be allocated a constant restriction which amounts to a flow cross-section of 10% to 20%, preferably 15% of a completely open flow cross-section.

20. Method as claimed in claim 17, wherein
the upper value range (Wo) is allocated a constant restriction which corresponds to a complete closure of the flow cross-section.

21. Method as claimed in claim 18, wherein
the lower value range (Wu) is allocated a constant restriction which corresponds to a complete closure of the flow cross-section.

22. Method as claimed in any one of claims 13 to 21, wherein
the flow cross-section is adjusted or restricted periodically in the consumer loop (3).

23. Method as claimed in claim 22, wherein
a time period between the periodic adjustment or restriction of the flow cross-section is between 5 min. and 15 min., preferably 10 min., if the input-side supply temperature (T_{supply}) is outside a predetermined value range (Wu, W_{M}, Wo).

24. Method as claimed in claim 22, wherein
a time period between the periodic adjustment or restriction of the flow cross-section is between 10 min. and 20 min., preferably 15 min., if the input-side supply temperature (T_{supply}) is within a predetermined value range (Wu, W_{M}, Wo).

## Revendications

1. Dispositif de réglage (1) pour le réglage de régulation automatique d'une vanne de réglage de débit (2) d'une boucle consommatrice (3) avec un échangeur de chaleur (30), notamment dans un système de régulation de la température (10) pour des immeubles ayant une source de régulation de température (4), un fluide caloporteur et une pompe (5), le dispositif de réglage (1) comprenant :
- un organe de réglage (6) conçu pour être couplé à la vanne de réglage de débit (2) pour régler et saisir la position d'ouverture de la vanne de réglage de débit (2) entre une position fermée et une position ouverte, notamment de façon graduelle ou pas à pas par le dispositif de réglage (1),
- un moyen de calcul (8) conçu pour calculer une commande de l'organe de réglage (6) en se fondant sur un écart de réglage (ΔT_{Regeldifferenz}),
- un moyen de saisie de température (7) qui saisit une température d'aller (Tvoriauf) côté entrée par rapport à la boucle consommatrice (3), dispositif de réglage (1) **caractérisé en ce que**
il est conçu pour réduire la vanne de réglage de débit (2) à une section de passage prédéfinie, plus petite que la section de passage réglée en se fondant sur l'écart de réglage (ΔT_{Regeldifferenz}) lorsque la température d'aller (T_{Vorlauf}) saisie côté entrée, se trouve dans une plage de valeurs, prédéterminée (Wu, W_{M}, Wo).

2. Dispositif de réglage (1) selon la revendication 1,
dans lequel
- l'organe de réglage (6) est à commande électrique,
- les moyens de saisie de température (7) saisissent une température de retour, côté sortie (T_{Rücklauf}) du fluide caloporteur qui circule,
- le moyen de calcul (8) est conçu pour calculer une commande électrique de l'organe de réglage (6) qui correspond à une position d'ouverture prédéfinie de la vanne de réglage de débit (2) - associée à une section de passage définie - en se fondant sur un écart de réglage (ΔT_{Regeldifferenz}), cet écart de réglage (ΔT_{Regeldifferenz}) à caculer étant l'écart entre une différence de température (ΔT_{Ist}), entre la température d'aller (T_{Vorlauf}), côté entrée, saisie et la température de retour (T_{Rücklauf}), côté sortie et la différence de température (ΔT_{Soll}) prédéfinie entre la température de retour (T_{Rücklauf}), côté sortie et la température d'aller (T_{Vorlauf}), côté entrée,
le dispositif de réglage (1) comportant en outre une interface (9) pour recevoir un signal d'activation externe pour activer le moyen de calcul (8) et/ou le dispositif de réglage (1),
le dispositif de réglage (1) comprenant un moyen de saisie de temps et une mémoire conçus pour saisir et enregistrer une durée d'activation précédente et une durée d'activation actuelle du signal d'activation et/ou une durée de désactivation entre deux activations, et
- le moyen de calcul (8) est conçu pour déterminer de manière variable la différence de température (ΔT_{Soll}) fondée sur la durée d'activation et/ou la durée de désactivation.

3. Dispositif de réglage (1) selon la revendication 1 ou 2,
dans lequel
des plages de valeurs prédéfinies (Wu, W_{M}, Wo) sont associées aux réductions constantes de la section de passage.

4. Dispositif de réglage (1) selon l'une des revendications 1 à 3,
dans lequel est définie :
une plage de valeurs moyenne fermée (W_{M}) de la température d'aller (T_{Vorlauf}), côté entrée couvrant une température ambiante, confortable de 20°C à 24°C.

5. Dispositif de réglage (1) selon l'une des revendications 1 à 3,
dans lequel est définie :
une plage de valeurs ouverte vers le haut (W_{O}) de la température d'aller (T_{Vorlauf}), côté entrée, dont la valeur limite inférieure est comprise entre 55°C et 60°C et qui évite d'endommager les matériaux de construction.

6. Dispositif de réglage (1) selon l'une des revendications 1 à 3,
dans lequel est définie :
une plage de valeurs, ouverte, inférieure (Wu) de la température d'aller (T_{Vorlauf}), côté entrée, dont la valeur limite supérieure est comprise entre 15°C et 17°C et qui inclut le point de rosé.

7. Dispositif de réglage (1) selon la revendication 4,
dans lequel
à la plage de valeurs, moyenne (W_{M}) est associée une réduction constante qui correspond à une section de passage de 10% à 20%, de préférence de 15% de la section de passage complètement ouverte.

8. Dispositif de réglage (1) selon la revendication 5,
dans lequel
à la plage de valeurs, supérieure (Wo) est associée une réduction constante qui correspond à la fermeture totale de la section de passage.

9. Dispositif de réglage (1) selon la revendication 6,
dans lequel
à la plage de valeurs, inférieure (Wu) est associée une réduction constante qui correspond à la fermeture totale de la section de passage.

10. Dispositif de réglage (1) selon l'une des revendications 1 à 9,
dans lequel
le réglage de la réduction de la section de passage est fait de manière périodique dans la boucle consommatrice (3).

11. Dispositif de réglage (1) selon la revendication 10,
dans lequel
une durée entre les réglages périodiques ou réductions de la section de passage est comprise entre 5 min et 15 min, de préférence est égale à 10 min, si la température d'aller (T_{Vorlauf}), côté entrée, est en dehors d'une plage de valeurs, prédéfinie (Wu, W_{M}, Wo).

12. Dispositif de réglage (1) selon la revendication 10,
dans lequel
une durée entre le réglage ou la réduction périodique de la section de passage se situe entre 10 min et 20 min, de préférence est égale à 15 min si la température d'aller (Tvoriauf), côté entrée, se situe dans une plage de valeurs, prédéfinie (Wu, W_{M}, Wo).

13. Procédé de réglage auto régulé du passage d'un fluide caloporteur dans une boucle consommatrice (3) avec un échangeur de chaleur (30) dans un système de réglage de température (10) d'immeuble avec une source de régulation de température (4) et une pompe (5),
le procédé comprenant au moins les étapes suivantes consistant à :
a) régler une section de passage réglable dans la boucle consommatrice (3) en se fondant sur un écart de réglage (ΔT_{Regeldifferenz}),
b) saisir une température d'aller (T_{Vorlauf}), côté entrée, du fluide caloporteur circulant dans la boucle consommatrice (3),
procédé **caractérisé par** l'étape consistant à :
c) réduire à une section de passage prédéfinie plus petite que la section de passage qui a été réglée en se fondant sur l'écart de réglage (ΔT_{Regeidifferenz}) si la température d'aller (T_{Vorlauf}), côté entrée, saisie, se situe dans une plage de valeurs, prédéfinie (Wu, W_{M}, Wo).

14. Procédé selon la revendication 13,
la boucle consommatrice (3) étant activable, de manière externe ; procédé comprenant au moins les étapes suivantes consistant à :
a) saisir une durée d'activation précédente ou actuelle et/ou une durée de désactivation de la boucle consommatrice (3),
b) saisir une température de retour (T_{Rücklauf}), côté sortie, du fluide caloporteur circulant dans la boucle consommatrice (3),
c) déterminer une différence de température variable (ΔT_{Soll}) à partir de la température de retour (T_{Rücklauf}), côté sortie, et de la température d'aller (Tvoriauf), côté entrée, en se fondant sur la durée d'activation et/ou la durée de désactivation,
d) calculer un écart de réglage (ΔT_{Regeidifferenz}) entre une différence de température (ΔT_{Ist}) à partir de la température d'aller (T_{Vorlauf}), coté entrée, saisie et la température de retour (T_{Rücklauf}), côté sortie ainsi que de la différence de température, prédéfinie (ΔT_{Soll}), et
e) calculer et régler une section de passage, réglable dans la boucle consommatrice (3) en se fondant sur l'écart de réglage (ΔT_{Regeidifferenz}).

15. Procédé selon la revendication 13 ou 14,
dans lequel
des plages de valeurs (Wu, W_{M}, Wo) prédéfinies, de réductions constantes sont associées à la section de passage, réglable.

16. Procédé selon l'une des revendications 13 à 14,
dans lequel
on prédéfinit une plage de valeurs moyennes, fermée (W_{M}) de la température d'aller (T_{Vorlauf}), coté entrée, et couvrant une température ambiante, agréable comprise entre 20°C et 24°C.

17. Procédé selon l'une des revendications 13 à 14,
selon lequel
on prédéfinit une plage de valeurs, ouverte, haute (Wo) de la température d'aller (T_{Vorlauf}), côté entrée dont la valeur limite, inférieure, est comprise entre 55°C et 60°C et qui évite d'endommager les matériaux de construction.

18. Procédé selon l'une des revendications 13 à 14,
selon lequel
on prédéfinit une plage de valeurs, inférieure, ouverture (Wu) de la température d'aller (T_{Vorlauf}), coté entrée dont la valeur limite, supérieure est comprise entre 15°C et 17°C et qui inclut le point de rosé.

19. Procédé selon la revendication 16,
dans lequel
une réduction constante est associée à la plage de valeurs, moyenne (W_{M}) qui correspond à une section de passage comprise entre 10% et 20%, de préférence égale à 15% de la section de passage complètement ouvert.

20. Procédé selon la revendication 17,
selon lequel
on associe une réduction constante à la plage de valeurs, supérieure (Wo) qui correspond à une fermeture totale de la section de passage.

21. Procédé selon la revendication 18,
dans lequel
on associe une réduction constante à la plage de valeurs (Wu), inférieure et qui correspond à la fermeture totale de la section de passage.

22. Procédé selon l'une des revendications 13 à 21,
selon lequel
le réglage ou la réduction de la section de passage dans la boucle consommatrice (3) se fait de manière périodique.

23. Procédé selon la revendication 22,
selon lequel
la durée comprise entre le réglage périodique ou la réduction de la section de passage est comprise entre 5 min et 15 min, de préférence elle est égale à 10 min, si la température d'aller (T_{Vorlauf}), coté entrée, est à l'extérieur d'une plage de valeurs, prédéfinie (Wu, W_{M}, Wo).

24. Procédé selon la revendication 22,
selon lequel
la durée comprise entre le réglage périodique ou la réduction de la section de passage est comprise entre 10 min et 20 min, de préférence elle est égale à 15 min, si la température d'aller (Tvoriauf), coté entrée, se situe dans une plage de valeurs, prédéfinie (Wu, W_{M}, Wo).
